# EUROPEAN PATENT SPECIFICATION

(11) **EP 1 929 861 B1**
(45) Date of publication and mention of the grant of the patent: **27.02.2013**
(21) Application number: 06820984.0
(22) Date of filing: 05.09.2006
(51) Int. Cl.: A01M 29/06

(54) **BIRD FLIGHT DIVERSION DEVICE AND SYSTEM FOR FIXING SAME TO OVERHEAD WIRES AND CABLES**
VOGELFLUGUMLENKVORRICHTUNG UND SYSTEM ZUR DEREN BEFESTIGUNG AN OBERLEITUNGEN UND KABELN
DISPOSITIF PERMETTANT DE FAIRE DEVIER LA TRAJECTOIRE DE VOL D'OISEAUX ET SON SYSTEME DE FIXATION A DES CABLES OU A DES FILS AERIENS

(30) Priority: 05.09.2005 CO 8870305
(43) Date of publication of application: 11.06.2008
(73) Proprietor: INTERCONEXIÓN ELÉCTRICA S.A. E.S.P., Medellin (CO)
(72) Inventor: RAMÍREZ, Mauricio, Medellin (CO); NARANJO, Alberto, Medellin (CO); NORIEGA, María del Pilar, Medellin (CO); LUNA, Miguel, Medellin (CO); CADENA, Luis, Medellin (CO); ALZATE, Apolinar, Medellin (CO)
(74) Representative: Carvajal y Urquijo, Isabel
(86) International application number: PCT/IB2006/003372
(87) International publication number: WO 2007/029118

(56) References cited:
- WO-A1-2005/062437
- ES-T3- 2 128 464
- ES-U- 1 060 811
- GB-A- 398 967
- GB-A- 191 212 577
- JP-A- 2002 176 901
- US-A- 2 085 077
- US-A1- 2004 255 837
- US-B1- 6 618 910

## Description

### Technological Field

The present invention relates to a device for diverting the flight of birds and preventing their collision with overhead wires or cables by means of visually standing out. The device comprises a fixing system for fixing to overhead wires or cables from which a central body is suspended, both completely made from a polymer material.

The central body consists of two components with perforations in order to decrease wind resistance, and they can be made of different colours for generating contrast with the terrain and the vegetation at different times of the day in the area in which the cables or wires are located. The bodies are assembled to one another in an intersecting manner by means of a snap-on interlocking, generating a volume greater than that of the components independently.

This flight diversion device intends to reduce the environmental problem of bird deaths in areas with a high concentration of birds or in migratory bird flight paths in which there are overhead wires or cables, such as high-voltage lines.

### State of the Art

Devices are placed on overhead wires or cables, such as high-voltage lines, which are used to increase the ability to see them and divert the flight of birds, thus preventing collision and reducing the environmental problem of bird deaths in areas with a high concentration of birds or in migratory bird flight paths. These devices are normally commercially known as flight diversion devices.

The placement of these devices on high-voltage cables started at the beginning of the century. There are currently many of these types of apparatus mentioned in the state of the art. Patent US 2,085,077 describes placing insulating discs to prevent contact between high-voltage cables. Although this document makes no reference to diverting the flight of birds, the device makes the presence of the cable stand out preventing the collision of the birds with the cables.

Among the devices which have been built to capture the attention of birds around overhead wires or cables, such as energy transmission lines, there are those devices which simulate birds of prey such as those specified in patent documents CA 366437, EP 0823210, EP 0031855 and GB 2124065. The drawback of these mechanisms is that in most cases they require a motor to provide movement to the silhouette of the bird of prey or need additional cables for their assembly, making them expensive and maintenance-dependent.

Another option intended for the same purpose relates to spherical markers to make high-voltage cables, which are widely used in areas with aircraft traffic, stand out. These types of large spheres are placed on cables as specified in patents US 4,885,835, US 5,964,180, US 5,372,335 and US 5,224,440. Several devices even generate light at night such as those described in patent application US2002/0069814 and patent US 5,208,577. The use of these spheres unfortunately presents some difficulties due to the fact that they are static, are large, are difficult to install, have a high cost and several have metal components which can corrode the overhead wires or cables.

Another device associated to this technological field is that disclosed in patent US 5,425,328 providing a flight diversion device formed by two polymer strips the movement of which makes it easier for the birds to see. However the fixing system for fixing same to the overhead wire or cable has metal components which corrode and therefore reduce the useful life of the cable.

The concept of movement was also used in patent application US2004/0255837 describing a fixing system and a planar hanging body. The problem detected with the use of this class of devices is that they are not visible to the birds located in certain positions.

In addition to the patents already described, patents US 543,329, JP 11191917, US 5,058,335 show the existence in the state of the art of other devices the function of which is the protection of the cable, preventing the birds from landing thereon. None of these mechanisms takes into account features which minimize or prevent the birds from colliding with the cables.

Finally completing the information prior to carrying out this invention there are colored spirals wrapped around the cables in order to make their presence stand out, as described in patent application JP 9247829.

- Document ES-U-1 060 811 discloses a device according to the preamble of claim 1 for providing safety to the birds, preventing birds from crashing against power lines, and therefore preventing their death or severe injuries. The device has different colored reflective films and is suspended from the power lines and moves pivotally around itself to provide some light reflections to be notified or scare away the birds. Specifically, the device is constituted by flat plates linked together to form dihedrals with different colored reflective films, and it has a chain with freely rotating rings and a hook member for suspending from the power lines.

It is evident from the previous information that there is the need in the state of the art to have bird flight diversion devices which have enough mobility to capture the attention of the birds, are made of materials that do not corrode the cable and are easy to install.

The present invention is aimed at a device bringing together these features and further having an arrangement of two intertwined bodies generating a volume greater than the system formed by a single plate, making it easier for the birds to see the device from any location.

### Description of the Drawings

Figure 1 shows the flight diversion device comprising a fixing system and a central body
Figure 2 shows the first component of the central body of the flight diversion device which is assembled with the fixing system.
Figure 3 shows the second component of the central body of the flight diversion device which is assembled with the component of Figure 2.
Figure 4 shows how the intersecting assembly of the two components of the central body of the flight diversion device is carried out by means of sliding between one another.
Figure 5 shows the two assembled components of the central body and the snap-on interlocking system.
Figure 6 shows the hook-shaped element of the fixing system in a closed position.
Figure 7 shows the hook-shaped element of the fixing system in an open position.
Figure 8 shows a variant in the fixing system for fixing the hook limiting the movement in the three coordinate axes.
Figure 9 shows the element of the fixing system characterized by having an outer thread and longitudinal groove providing a U shape allowing assembly on cables or wires of different diameters.
Figure 10 shows the element of the fixing system characterized by an inner thread for assembling with the element of Figure 8 provided with longitudinal scores for facilitating the grip during assembly or disassembly.
Figure 11 shows the positioning between the hook and the element characterized by an inner thread.
Figure 12 shows a cross sectional view of the hook and the element assembled characterized by an inner thread.
Figure 13 shows the hook and the element assembled characterized by an inner thread.
Figure 14 shows the assembly of the fixing system for fixing to overhead wires or cables.
Figure 15 shows the fixing system joined to the overhead wire or cable.
Figure 16 shows the fixing system for fixing to the overhead wire or cable with the hook open in order to allow the assembly with the central body.

### Summary of the Invention

The present invention according to claim 1 relates to a device for diverting the flight of birds preventing their collision with overhead wires or cables by means of visually standing out.

The device comprises a fixing system for fixing same to overhead wires or cables from which a central body is suspended, both made completely from a polymer material with a modulus of elasticity of around 1000 MPa and with additives ensuring its stability for more than 10 years without undergoing photodegradation or thermo-oxidative degradation. Said materials are electrically-insulating and do not corrode the overhead wires or cables.

The flight diversion device is lightweight, low cost, with perforations for minimizing wind resistance and preventing significant vibrations in the overhead wires or cables. Furthermore, it is easy to install and has enough mobility to draw the attention of birds and thus prevent their collision with overhead wires or cables. Another point to be highlighted is that the fixing system is characterized by not substantially diminishing the clamping force on the overhead wire or cable over time. Finally, the design has the advantage of being modular, which allows the complete or partial change if any of its elements fails.

### Detailed Description

The collision of birds with overhead wires or cables is generally due in part to the low visibility they have due to their size, to the conditions of the terrain and the vegetation at different times of the day. According to specialized studies in this topic /1/, accidents increase when the overhead wires or cables are less visible, for example in conditions of fog, rain or because of variations in the intensity of the light at sunrise and sunset. Potentially critical places include areas near lakes, rivers and wetlands, coastal areas and migratory flight paths.

The present invention proposes to increase the visibility of overhead wires or cables by means of placing flight deviation devices, making it easier for birds to determine their location and divert their flight in order to prevent collision.

The flight diversion device of the present invention has a central body comprising two components which are assembled to one another in an intersecting manner, occupying a volume greater than the components independently. Both components can have different colours in order to generate contrast with the terrain and vegetation at different times of the day in the area in which the cables or wires are located. The components have perforations for decreasing the wind resistance and are suspended from the fixing system by simple support, which allows greater mobility for capturing the attention of the birds during flight.

The fixing system comprises three elements assembled to one another by threading or snap-on interlocking, ensuring a fixed position over time on the overhead wire or cable. The central body and the fixing system of the flight diversion device do not have retaining surfaces which allow becoming dirty or accumulating water and therefore corroding the overhead wires or cables.

The flight diversion device was tested in a wind tunnel and was able to support winds of up to 100 Km/h without undergoing deterioration or operational problems.

In order to further clarify the invention, the flight diversion device and the fixing system are described in detail below with the aid of the previously mentioned figures.

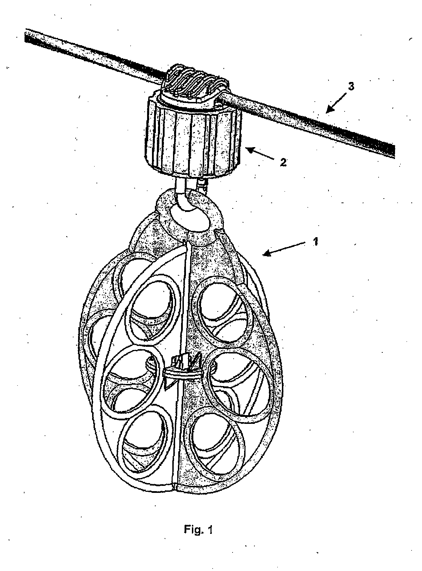

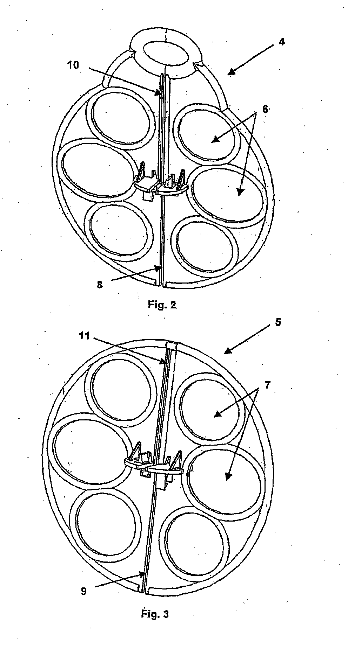

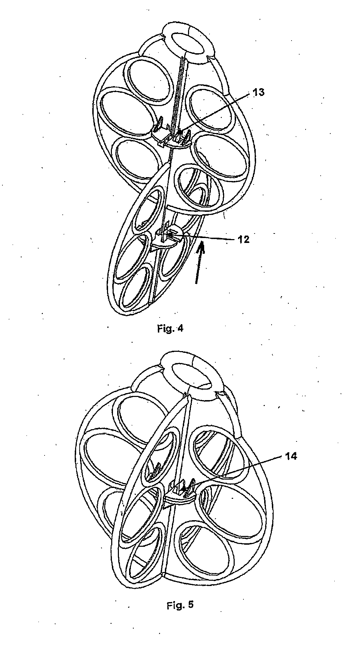

Figure 1 shows the central body (1) and the fixing system (2) fixed to the overhead wire or cable (3). As observed in Figures 2 and 3, the central body comprises two components (4) and (5) with holes (6) and (7) for decreasing wind resistance. These figures also illustrate the grooves (8) and (9) and the guides (10) and (11), which have been designed to facilitate sliding and assembling the components of the central body in an intersecting manner, as shown in Figure 4. This last figure shows one of the four catches (12) and one of the four bases (13) to carry out the snap-on interlocking (14), maintaining the two components of the central body of the flight diversion device joined to one another, as shown in Figure 5.

In a preferred embodiment, the components 4 and 5 of the central body of the flight diversion device can have different colours to generate contrast with the terrain and the vegetation at different times of the day in the area in which the cables or wires are located. It is equally important to highlight that upon being assembled in an intersecting manner they occupy a greater volume than that of the components independently, thus making it easier to see the flight diversion device from any angle.

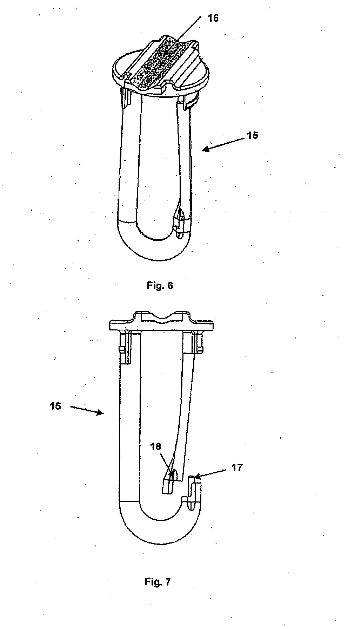

Continuing with the description of the deviation device, Figure 6 shows the first element (15) of the fixing system characterized by its hook shape. This figure depicts the hook in a closed position. A V-shaped channel section (16) for fixing to overhead wires or cables of different diameters can also be observed in the upper part of the element (15).

The depiction of the same element (15) but in the open position is shown in Figure 7. Said position allows assembling the central body of the flight diversion device shown in Figure 5. The area for joining the element (15) formed by a central protrusion (17) and a cavity (18) in which the protrusion is housed to prevent the hook from easily opening at maximum load levels of operation can also be observed in this last figure.

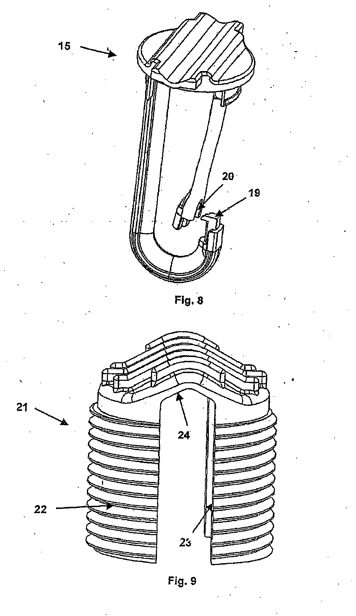

An alternative of the element (15) is shown in Figure 8, showing a protrusion (19) and a housing (20) restricting the movement in the three X, Y and Z coordinate axes once the hook is closed. Consequently the hook in the assembly area has two possible geometries for its manufacture.

A second element (21) of the fixing system characterized by an outer thread (22) and a U-shaped longitudinal groove (23) is shown in Figure 9. This figure equally shows in the upper part of the element (21) the existence of a V-shaped channel section (24) which allows assembling on cables or wires of different diameters.

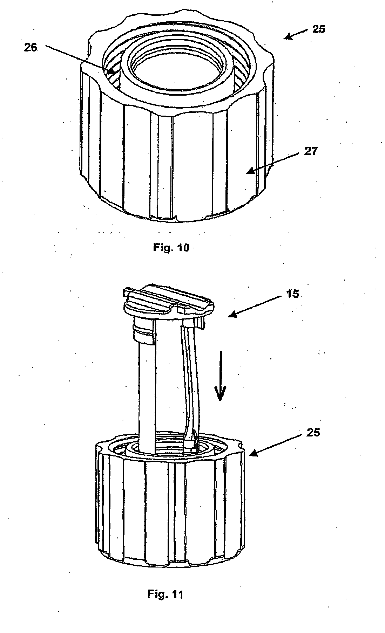

The third element (25) of the fixing system is depicted in Figure 10 and is characterized by an inner thread (26) assembled with the outer thread (22) of the element (21). It further shows how the element (25) is provided with longitudinal scores (27) for facilitating the manual grip during assembly or disassembly.

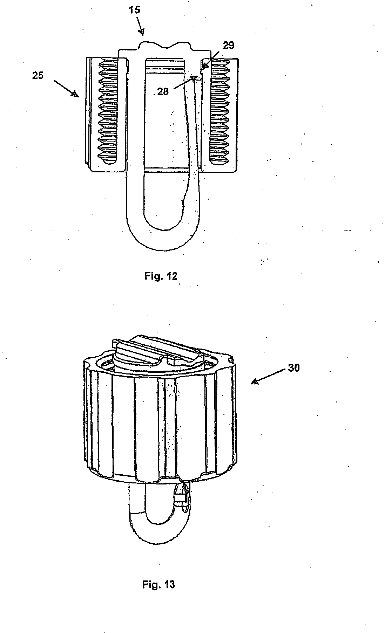

The joining of elements (15) and (25) is shown in Figures 11 and 12, depicting the way in which element (15) is introduced in element (25) by means of axially sliding until a press fit is carried out between the fasteners (28) and (29) of elements (15) and (25) respectively. In Figure 13 the assembly (30) resulting from assembling elements (15) and (25) is schematized.

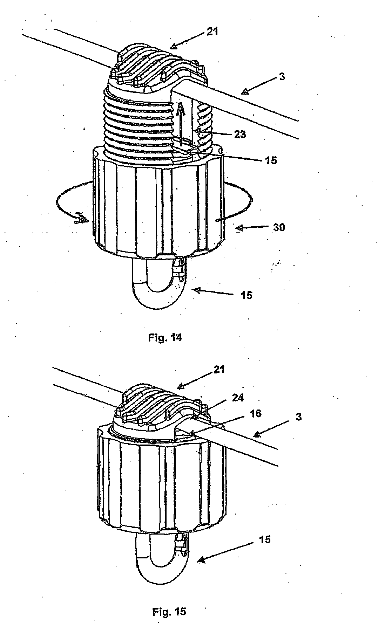

In order to assemble the fixing system (2), the element (21) is placed on the overhead wire or cable (3) as indicated in Figure 14. The assembly (30) is subsequently introduced by means of threading on the element (21). As the assembly (30) is threaded on the element (21) an axial sliding occurs in which the element (15) moves linearly on the groove (23) of the element (21) until the overhead wire or cable (3) is fixed by means of the V-shaped channel section (16) of element (15) against the V-shaped channel section (24) of element (21), as shown in Figure 15.

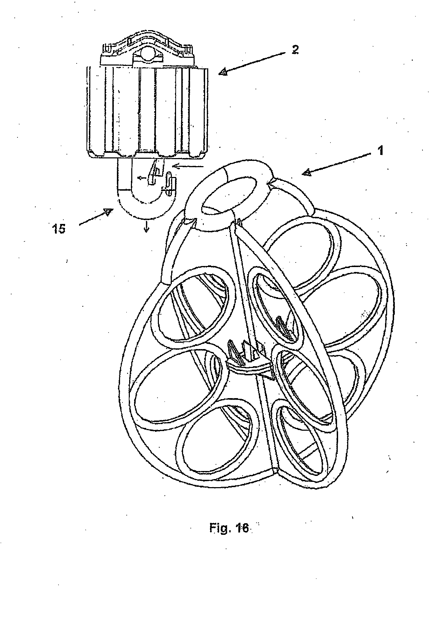

Once the fixing system (2) is assembled to the overhead wire or cable (3) the lower part of the element (15) is open, as illustrated in Figure 16, and the central body (1) of the deviation device is inserted. The element (15) is then closed, leaving the bird flight diversion device assembled to the overhead wire or cable, as depicted in Figure 1.

In addition to the previously mentioned advantages, the disassembled fixing system and central body of the flight diversion device occupy little space facilitating their transport. It must equally be pointed out that these deviation devices can be assembled by a single person on overhead wires or cables, on land, before their installation or with the overhead wire or cable installed.

In addition as a result of their modular construction, these deviation devices are easy to disassemble and their components are easy to replace if necessary.

/1/ De la Zerda, Susana. Visión de color en las aves. Literature Review. October 2004.

## Claims

1. A device for diverting the flight of birds in order to prevent collisions with overhead wires or cables by visually standing out, comprising :
■ a central body (1) consisting of two or more components (4,5) having a guide (10,11) and a longitudinal groove (8,9) arranged such that they allow the intersecting assembly by sliding the components between one another, the assembled body having a volume greater than that of the components independently, **characterized in that** the device comprises
■ a fixing system (2) for fixing same to overhead wires or cables of different diameters formed by three elements assembled to one another by threading or snap-on interlocking:
- A first element (15) having an easy open and close hook shape;
- a second element (21) having an outer thread and a U-shaped longitudinal groove, which allows assembling on cables or wires of different diameters; and
- a third element (25) having an inner thread for assembling with the second element (21), and being provided in its outer part with longitudinal scores for facilitating grip during assembly or disassembly and further housing the first element (15); the device being further **characterized in that** it is completely made from a polymer material.

2. The device of claim 1, **characterized in that** the upper part of the second element (21) and the upper part of the first element (15) of the fixing system both have a V-shaped channel section which upon being assembled to one another allow the adjusted and safe grip of overhead wires or cables of different diameters.

3. The device according to claims 1 or 2, **characterized in that** the first element of the fixing system (15) longitudinally moves within the second element (21) by threading the third element (25) on the second element (21) in order to allow assembling or disassembling the fixing system.

4. The device according to any one of claims 1 to 3, **characterized in that** the closure of the first element (15) of the fixing system is formed by a protrusion and a cavity housing it to prevent the hook from easily opening at maximum load levels of operation.

5. The device according to any one of claims 1 to 4, **characterized in that** the third element (25) of the fixing system comprises perforations on its lower part in order to prevent it from becoming dirty.

6. The device of claim 1, **characterized in that** the two components of the central body have different colours for generating a contrast in color with the terrain and the vegetation at different times of the day in the area in which the cables or wires are located.

7. The device of claim 6, **characterized in that** the two components of the central body have holes in order to reduce the resistance of the wind and the significant vibrations in the overhead wires or cables.

## Patentansprüche

1. Vorrichtung zur Ablenkung der Flugbahn von Vögeln, um Kollisionen gegen Oberleitungen oder Kabeln durch optisches Auffallen zu verhindern, umfassend:
■ einen zentralen Körper (1), bestehend aus zwei oder mehreren Bauteilen (4, 5), die eine Führung (10, 11) und eine longitudinale Nut (8, 9) aufweisen, die so angeordnet sind, dass sie eine überschneidende Montage durch Verschieben der Bauteile ineinander ermöglichen, wobei der montierte Körper ein Volumen aufweist, das größer als das Volumen der Bauteile einzeln ist, **dadurch gekennzeichnet, dass** die Vorrichtung
■ ein Befestigungssystem (2) umfasst, für die Befestigung derselben an Oberleitungen oder Kabeln verschiedener Durchmesser, welches aus drei Elemente gebildet ist, die durch Aufschrauben oder schnappendes Verriegeln miteinander folgender Elemente montiert wird:
- eines ersten Elements (15) mit einer Hakenform zum leichten Öffnen und Schließen;
- eines zweiten Elements (21), welches ein Außengewinde und eine U-förmige longitudinale Nut aufweist, welches die Montage an Kabeln oder Leitungen verschiedener Durchmesser ermöglicht; und
- eines dritten Elements (25), welches ein Innengewinde für die Montage mit dem zweiten Element (21) aufweist, und welches außen mit longitudinalen Rillen versehen ist, die den Griff während der Montage oder Demontage erleichtern und zusätzlich das erste Element (15) aufnehmen;
wobei die Vorrichtung zusätzlich **dadurch gekennzeichnet ist, dass** sie völlig aus einem polymeren Material hergestellt ist.

2. Vorrichtung nach Anspruch 1, **dadurch gekennzeichnet, dass** sowohl der obere Teil des zweiten Elements (21) als auch der obere Teil des ersten Elements (15) des Befestigungssystems einen V-förmigen Kanalquerschnitt aufweisen, welcher nach der Montage miteinander den eingestellten und sicheren Griff von Oberleitungen oder Kabeln verschiedener Durchmesser ermöglicht.

3. Vorrichtung nach Anspruch 1 oder 2, **dadurch gekennzeichnet, dass** das erste Element (15) des Befestigungssystems sich innerhalb des zweiten Elements (21) longitudinal bewegt durch Aufschrauben des dritten Elements (25) auf den zweiten Element (21), um die Montage oder Demontage des Befestigungssystems zu ermöglichen.

4. Vorrichtung nach einem der Ansprüche 1 bis 3, **dadurch gekennzeichnet, dass** der Verschluss des ersten Elements (15) des Befestigungssystems aus einem Vorsprung und einer diesen aufnehmenden Kavität gebildet ist, um zu verhindern, dass sich der Haken bei maximaler Betriebsbelastung leicht öffnet.

5. Vorrichtung nach einem der Ansprüche 1 bis 4, **dadurch gekennzeichnet, dass** das dritte Element (25) des Befestigungssystems Bohrungen an seinem unteren Teil umfasst, um zu verhindern, dass es schmutzig wird.

6. Vorrichtung nach Anspruch 1, **dadurch gekennzeichnet, dass** beide Bauteile des zentralen Körpers verschiedene Farben haben, um einen Farbkontrast mit dem Land und der Vegetation zu verschiedenen Tageszeiten im Bereich in dem die Kabeln oder Leitungen angebracht sind, zu erzeugen. ,

7. Vorrichtung nach Anspruch 6, **dadurch gekennzeichnet, dass** beide Bauteile des zentralen Körpers Löcher aufweisen, um den Widerstand von dem Wind und die wesentlichen Vibrationen in den Oberleitungen oder Kabeln zu verringern.

## Revendications

1. Dispositif pour détourner le vol d'oiseaux afin d'éviter des collisions avec les fils ou câbles aériens par détachement visuel, comprenant :
• un corps central (1) consistant en deux ou plusieurs composants (4, 5) ayant un guide (10, 11) et une rainure longitudinale (8, 9) disposée de manière à ce qu'elle permette l'assemblage d'intersection en glissant les composant les uns entre les autres, le corps assemblé ayant un volume plus grand que celui des composants indépendamment, **caractérisé en ce que** le dispositif comprend
• un système de fixation (2) pour le fixer aux fils ou câbles aériens de différents diamètres formé par trois éléments assemblés les uns aux autres par filetage ou enclenchement encliquetable :
- un premier élément (15) sous forme de crocher d'ouverture et fermeture facile ;
- un deuxième élément (21) ayant un filet extérieur et une rainure longitudinale sous forme de U, qui permet l'assemblage sur des câbles ou fils de différents diamètres ; et
- un troisième élément (25) ayant un filet intérieur pour l'assemblage avec le deuxième élément (21), et étant pourvu sur sa partie extérieure de stries longitudinales pour faciliter la prise pendant l'assemblage ou désassemblage et pour loger, en outre, le premier élément (15) ;
le dispositif étant **caractérisé en outre en ce qu'**il est complètement réalisé en une matière polymérique.

2. Dispositif selon la revendication 1, **caractérisé en ce que** la partie supérieure du deuxième élément (21) et la partie supérieure du premier élément (15) du système de fixation ont les deux une section de canal sous forme de V qui lors de leur assemblage l'un à l'autre permettent la prise ajusté et sûre des fils ou câbles aériens de différents diamètres.

3. Dispositif selon les revendications 1 ou 2, **caractérisé en ce que** le premier élément (15) du système de fixation se déplace longitudinalement à l'intérieur du deuxième élément (21) en enfilant le troisième élément (25) sur le deuxième élément (21) afin de permettre l'assemblage ou désassemblage du système de fixation.

4. Dispositif selon les revendications 1 à 3, **caractérisé en ce que** la fermeture du premier élément (15) du système de fixation est formée par une protubérance et une cavité le logeant pour éviter que le crochet ne s'ouvre facilement aux niveaux de charge maximale de fonctionnement.

5. Dispositif selon l'une quelconque des revendications 1 à 4, **caractérisé en ce que** le troisième élément (25) du système de fixation comprend des perforations sur sa partie inférieure afin d'éviter son encrassement.

6. Dispositif selon la revendication 1, **caractérisé en ce que** les deux composants du corps central sont de couleurs différentes pour générer un contraste de couleur par rapport au terrain et la végétation à différents moments de la journée dans la zone où sont situés les câbles ou fils.

7. Dispositif selon la revendication 6, **caractérisé en ce que** les deux composants du corps central ont des trous afin de réduire la résistance du vent et les vibrations importantes sur les fils ou câbles aériens.
